# EUROPÄISCHE PATENTSCHRIFT

(11) **EP 3 221 617 B1**
(45) Veröffentlichungstag und Bekanntmachung des Hinweises auf die Patenterteilung: **03.03.2021**
(21) Anmeldenummer: 15797669.7
(22) Anmeldetag: 20.11.2015
(51) Int. Cl.: F16H 61/02

(54) **VERFAHREN ZUM BETREIBEN EINER GETRIEBEEINRICHTUNG FÜR EIN KRAFTFAHRZEUG SOWIE ENTSPRECHENDE GETRIEBEEINRICHTUNG**
METHOD FOR OPERATING A TRANSMISSION DEVICE FOR A MOTOR VEHICLE, AND CORRESPONDING TRANSMISSION DEVICE
PROCÉDÉ PERMETTANT DE FAIRE FONCTIONNER UNE BOÎTE DE VITESSES D'UN VÉHICULE AUTOMOBILE ET BOÎTE DE VITESSES CORRESPONDANTE

(30) Priorität: 20.11.2014 DE 102014017174
(43) Veröffentlichungstag der Anmeldung: 27.09.2017
(73) Patentinhaber: Audi AG, 85045 Ingolstadt (DE)
(72) Erfinder: ENKE, Martin, 85057 Ingolstadt (DE); HERRMANN, Arne, 81927 München (DE); WEISSBACH, Paul, 01277 Dresden (DE)
(74) Vertreter: Lehle, Josef
(86) Internationale Anmeldenummer: PCT/EP2015/077197
(87) Internationale Veröffentlichungsnummer: WO 2016/079287

(56) Entgegenhaltungen:
- DE-A1- 4 219 382
- US-A1- 2008 146 407
- US-A1- 2009 055 062

## Beschreibung

Die Erfindung betrifft ein Verfahren zum Betreiben einer Getriebeeinrichtung für ein Kraftfahrzeug, wobei ein Fahrgang aus einer Fahrgangmenge ausgewählt und an einem Getriebe eingestellt wird und bei Überschreiten einer Drehzahlobergrenze ein Fahrgang mit einer größeren Übersetzung aus der Fahrgangmenge ausgewählt und an dem Getriebe eingestellt wird, wobei in einer Normalbetriebsart die Fahrgangmenge einer Normalbetriebsfahrgangmenge, die eine Vielzahl von unterschiedlichen Fahrgängen umfasst, und die Drehzahlobergrenze einer Normalbetriebsdrehzahlobergrenze entspricht, und in einer Alternativbetriebsart die Fahrgangmenge einer Alternativbetriebsfahrgangmenge, die eine geringere Anzahl an unterschiedlichen Fahrgängen aufweist als die Normalbetriebsfahrgangmenge, und die Drehzahlobergrenze einer von der Normalbetriebsdrehzahlobergrenze verschiedenen Alternativbetriebsdrehzahlobergrenze entspricht. Die Erfindung betrifft weiterhin eine Getriebeeinrichtung für ein Kraftfahrzeug.

Die Getriebeeinrichtung ist dem Kraftfahrzeug zugeordnet und bildet insoweit beispielsweise einen Bestandteil des Kraftfahrzeugs. Die Getriebeeinrichtung liegt insbesondere in einer Wirkverbindung zwischen einer Antriebseinrichtung des Kraftfahrzeugs und wenigstens einer angetriebenen Achse des Kraftfahrzeugs vor. Selbstverständlich können auch mehrere angetriebene Achsen vorgesehen sein. In diesem Fall liegt die Getriebeeinrichtung in der Wirkverbindung zwischen der Antriebseinrichtung und zumindest einigen der angetriebenen Achsen, insbesondere allen angetriebenen Achsen, vor.

Die Antriebseinrichtung dient dabei dem Bereitstellen eines auf das Antreiben des Kraftfahrzeugs gerichteten Drehmoments. Dieses Drehmoment wird über die Getriebeeinrichtung beziehungsweise über das der Getriebeeinrichtung zugeordnete Getriebe übertragen. Die Getriebeeinrichtung dient dem Einstellen unterschiedlicher Übersetzungen zwischen der Antriebseinrichtung und der wenigstens einen angetriebenen Achse. Jede dieser Übersetzungen ist einem Fahrgang zugeordnet. Üblicherweise liegt eine Vielzahl von Fahrgängen vor, wobei jedem Fahrgang eine Übersetzung zugeordnet ist, welche von den Übersetzungen der anderen Fahrgänge verschieden ist. Die Fahrgänge umfassen vorzugsweise mehrere Vorwärtsfahrgänge. Zusätzlich kann den Fahrgängen wenigstens ein Rückwärtsgang zugeordnet sein.

Mithilfe des Getriebes können also verschiedene Fahrgänge beziehungsweise Übersetzungen eingestellt werden. Das Getriebe liegt insoweit als Schaltgetriebe vor. Zum Einstellen eines bestimmten Fahrgangs an dem Getriebe, beispielsweise zum Anfahren des Kraftfahrzeugs, wird der Fahrgang aus einer Fahrgangmenge ausgewählt, welche vorzugsweise eine Vielzahl von Fahrgängen aufweist, insbesondere alle von dem Getriebe bereitgestellten Fahrgänge. Anschließend wird der ausgewählte Fahrgang an dem Getriebe eingestellt, sodass die dem Fahrgang zugeordnete Übersetzung nachfolgend zwischen der Antriebseinrichtung und der wenigstens einen angetriebenen Achse vorliegt. Das Anfahren liegt beispielsweise vor, wenn sich das Kraftfahrzeug aus einem Stillstand in Bewegung setzt beziehungsweise setzen soll.

Weiterhin ist vorgesehen, dass bei Überschreiten einer Drehzahlobergrenze, insbesondere durch eine Drehzahl einer mit der Antriebseinrichtung wirkverbundenen oder wirkverbindbaren Eingangswelle des Getriebes und/oder einer Drehzahl der Antriebseinrichtung, aus der Fahrgangmenge ein Fahrgang ausgewählt wird, welcher eine größere Übersetzung aufweist als der momentan an dem Getriebe eingestellte Fahrgang. Zusätzlich kann esvorgesehen sein, dass bei Unterschreiten der Drehzahluntergrenze, insbesondere durch die Drehzahl der Eingangswelle und/oder die Drehzahl der Antriebseinrichtung, ein Fahrgang aus der Fahrgangmenge ausgewählt wird, welcher eine kleinere Übersetzung aufweist als der momentan an dem Getriebe eingestellte Fahrgang. Der auf diese Art und Weise ausgewählte Fahrgang wird nachfolgend an dem Getriebe eingestellt, sodass die ihm zugeordnete Übersetzung zwischen der Antriebseinrichtung und der wenigstens einen angetriebenen Achse vorliegt.

Aus dem Stand der Technik ist die Druckschrift DE 42 19 382 A1 bekannt. Diese beschreibt eine fahrstilangepasste Gangwechselsteuerung bei elektronisch gesteuerten Automatikgetrieben in Kraftfahrzeugen, mit einem in mindestens zwei Positionen willkürlich einstellbaren Wählschalter, bei der der jeweils aktuelle Fahrstil in Form von Fahrstilkategorien erfasst wird und bei der zu jeder Fahrstilkategorie ein ihr zugeordnetes Schaltkennfeld ausgewählt wird, wobei die jeweils erfasste Fahrstilkategorie zur Auswahl des ihr zugeordneten Schaltkennfeldes durch die am Wählschalter eingestellte Position veränderbar ist.

Weiterhin sind aus dem Stand der Technik die Druckschriften US 2009/0055062 A2, US 2008/146407 A1, DE 35 34 971 A, DE 10 2004 047 967 A, DE 10 2005 049 710 A, DE 10 2004 015 966 A, DE 600 089 74 T und DE 39 22 051 C bekannt.

Es ist nun Aufgabe der Erfindung, ein Verfahren zum Betreiben einer Getriebeeinrichtung vorzuschlagen, welches gegenüber anderen Verfahren Vorteile aufweist, insbesondere einen höheren Fahrkomfort des Kraftfahrzeugs ermöglicht.

Dies wird erfindungsgemäß mit einem Verfahren mit den Merkmalen des Anspruchs 1 erreicht. Dabei ist vorgesehen, dass ein kleinster Fahrgang der Alternativbetriebsfahrgangmenge größer ist als ein kleinster Fahrgang der Normalbetriebsfahrgangmenge, und dass die Alternativbetriebsdrehzahlobergrenze höher ist als die Normalbetriebsdrehzahlobergrenze.

Grundsätzlich ist vorgesehen, dass in einer Normalbetriebsart die Fahrgangmenge einer Normalbetriebsfahrgangmenge, die eine Vielzahl von unterschiedlichen Fahrgängen umfasst, und die Drehzahlobergrenze einer Normalbetriebsdrehzahlobergrenze entspricht, und in einer Alternativbetriebsart die Fahrgangmenge einer Alternativbetriebsfahrgangmenge, die eine geringere Anzahl an unterschiedlichen Fahrgängen aufweist als die Normalbetriebsfahrgangmenge, und die Drehzahlobergrenze einer von der Normalbetriebsdrehzahlobergrenze verschiedenen Alternativbetriebsdrehzahlobergrenze entspricht.

Das Verfahren zum Betreiben einer Getriebeeinrichtung weist insoweit zwei unterschiedliche Betriebsarten, nämlich die Normalbetriebsart sowie die Alternativbetriebsart auf. Vorzugsweise erfolgt das Betreiben der Getriebeeinrichtung entweder in der Normalbetriebsart oder in der Alternativbetriebsart. In der Alternativbetriebsart wird zumindest eine Größe anders gewählt als in der Normalbetriebsart, wobei die Größe die Fahrgangmenge, die Drehzahlobergrenze oder die Drehzahluntergrenze sein kann. Selbstverständlich können in der Alternativbetriebsart auch mehrere oder alle der genannten Größen anders als in der Normalbetriebsart gewählt sein. Ein Umschalten zwischen der Normalbetriebsart und der Alternativbetriebsart und/oder umgekehrt wird beispielsweise in Abhängigkeit von wenigstens einer Betriebsgröße und/oder Zustandsgröße vorgenommen.

Erfindungsgemäß ist es vorgesehen, dass die Fahrgangmenge in der Normalbetriebsart der Normalbetriebsfahrgangmenge und in der Alternativbetriebsart der Alternativbetriebsfahrgangmenge entspricht. Dabei ist vorgesehen, dass die Drehzahlobergrenze in der Normalbetriebsart der Normalbetriebsdrehzahlobergrenze und in der Alternativbetriebsart der Alternativbetriebsdrehzahlobergrenze entspricht. Zusätzlich kann weiterhin vorgesehen sein, dass die Drehzahluntergrenze in der Normalbetriebsart der Normalbetriebsdrehzahluntergrenze und in der Alternativbetriebsart der Alternativbetriebsdrehzahluntergrenze entspricht. Dabei ist die Normalbetriebsfahrgangmenge von der Alternativbetriebsfahrgangmenge und/oder die Normalbetriebsdrehzahlobergrenze von der Alternativbetriebsdrehzahlobergrenze und/oder die Normalbetriebsdrehzahluntergrenze von der Alternativbetriebsdrehzahluntergrenze verschieden.

Beispielsweise umfasst die Normalbetriebsfahrgangmenge alle Fahrgänge oder zumindest alle Vorwärtsfahrgänge des Getriebes. Entsprechend kann der an dem Getriebe einzustellende beziehungsweise der einzulegende Fahrgang in der Normalbetriebsart aus allen Fahrgängen oder zumindest allen Vorwärtsfahrgängen des Getriebes ausgewählt werden. In der Alternativbetriebsart entspricht dagegen die Fahrgangmenge der Alternativbetriebsfahrgangmenge, welche lediglich eine geringere Anzahl an unterschiedlichen Fahrgängen aufweist als die Normalbetriebsfahrgangmenge. Beispielsweise umfasst die Alternativbetriebsfahrgangmenge nur einige, nicht jedoch alle Fahrgänge, insbesondere Vorwärtsfahrgänge, welche in der Normalbetriebsfahrgangmenge enthalten sind.

Insgesamt steht also in der Alternativbetriebsart eine geringere Anzahl an unterschiedlichen Fahrgängen zur Verfügung als in der Normalbetriebsart. Des Weiteren kann es vorgesehen sein, dass die Schaltpunkte in der Alternativbetriebsart anders gewählt werden als in der Normalbetriebsart, also dass entweder die Drehzahlobergrenze, die Drehzahluntergrenze oder beide Drehzahlgrenzen in der Alternativbetriebsart anders gewählt sind als in der Normalbetriebsart. Mit einer derartigen Vorgehensweise kann die Anzahl von Schaltvorgängen während einer Fahrt des Kraftfahrzeugs reduziert werden, insbesondere in stillstandsnahen Fahrzuständen, wie sie beispielsweise im Stop and Go-Verkehr beziehungsweise einer Stausituation auftreten können. Häufige Schaltvorgänge wirken hektisch und beunruhigen das Kraftfahrzeug. Zudem fallen sie Insassen des Kraftfahrzeugs unangenehm auf. Dem kann mit der hier beschriebenen Vorgehensweise entgegengewirkt werden.

Zusätzlich oder alternativ kann vorgesehen sein, ein Anfahrelement und/oder eine Überbrückungskupplung des Anfahrelements in der Normalbetriebsart bei Überschreiten einer ersten Drehzahlschwelle und in der Alternativbetriebsart bei Überschreiten einer zweiten Drehzahlschwelle oder einer dritten Drehzahlschwelle zu schließen, wobei die zweite Drehzahlschwelle größer als die erste Drehzahlschwelle und die dritte Drehzahlschwelle größer als die zweite Drehzahlschwelle ist. Die Überbrückungskupplung dient insbesondere der Überbrückung des Anfahrelements. Beispielsweise wird die Überbrückungskupplung geschlossen, wenn das Anfahrelement ebenfalls geschlossen ist. Mithilfe der Überbrückungskupplung kann das Anfahrelement überbrückt werden, bei geschlossener Überbrückungskupplung ist seine Eingangsseite also starr mit seiner Ausgangsseite verbunden.

Die Drehzahlschwellen sind beispielsweise in Form von Absolutwerten oder von Relativwerten, insbesondere bezüglich einer Leerlaufdrehzahl der Antriebseinrichtung oder der Eingangswelle, angegeben. Sobald die Drehzahl der Antriebseinrichtung beziehungsweise der Eingangswelle die entsprechende Drehzahlschwelle überschreitet, wird das Anfahrelement beziehungsweise die Überbrückungskupplung geschlossen, insbesondere vollständig geschlossen. Beispielsweise ist es vorgesehen, das Anfahrelement lediglich teilweise zu schließen, wenn die Drehzahl kleiner ist als die Drehzahlschwelle, und vollständig zu schließen, wenn die Drehzahl die Drehzahlschwelle erreicht oder überschreitet. Es kann vorgesehen sein, das Anfahrelement umso weiter zu schließen, je größer die Drehzahl ist, insbesondere je weiter die Drehzahl die Leerlaufdrehzahl übersteigt.

Zusätzlich kann es vorgesehen sein, bei Erreichen oder Überschreiten der Drehzahlschwelle, also bei vollständig geschlossenem Anfahrelement, die Überbrückungskupplung ebenfalls zu schließen, um das Anfahrelement zu überbrücken. Das Schließen der Überbrückungskupplung kann auch erst bei Überschreiten einer dritten Drehzahlschwelle vorgesehen sein, welche zumindest in der Alternativbetriebsart größer ist als die zweite Drehzahlschwelle.

In der Normalbetriebsart kann dagegen die dritte Drehzahlschwelle der ersten Drehzahlschwelle entsprechen. Es ist insoweit in der Normalbetriebsart vorgesehen, das Anfahrelement bis zum Erreichen der ersten Drehzahlschwelle immer weiter zu schließen, sodass es mit dem Erreichen der ersten Drehzahlschwelle vollständig geschlossen ist. Gleichzeitig wird bei dem Erreichen der ersten Drehzahlschwelle die Überbrückungskupplung geschlossen.

In der Alternativbetriebsart soll analog das Anfahrelement bis zum Erreichen der zweiten Drehzahlschwelle immer weiter geschlossen werden, sodass es mit dem Erreichen der zweiten Drehzahlschwelle, die größer ist als die erste Drehzahlschwelle, vollständig geschlossen ist. Es kann nun ebenfalls mit dem Erreichen der zweiten Drehzahlschwelle die Überbrückungskupplung geschlossen werden. Alternativ kann dies erst mit Erreichen oder Überschreiten der dritten Drehzahlschwelle erfolgen, die wiederum größer ist als die zweite Drehzahlschwelle.

Beispielsweise ist die zweite Drehzahlschwelle um mindestens 10 %, mindestens 20 %, mindestens 30 %, mindestens 40 % oder mindestens 50 % größer als die erste Drehzahlschwelle. Die dritte Drehzahlschwelle kann wiederum um mindestens 10 %, mindestens 20 %, mindestens 30 %, mindestens 40 % oder mindestens 50 % größer sein als die zweite Drehzahlschwelle. Mit der beschriebenen Vorgehensweise kann ein unangenehmes Ruckeln des Kraftfahrzeugs während einer Langsamfahrt des Kraftfahrzeugs mit häufigen Stopps beziehungsweise einer Stausituation vermieden werden.

Erfindungsgemäß ist vorgesehen, dass ein kleinster Fahrgang der Alternativbetriebsfahrgangmenge größer ist als ein kleinster Fahrgang der Normalbetriebsfahrgangmenge. Darunter ist insbesondere zu verstehen, dass die Übersetzung des kleinsten Fahrgangs der Alternativbetriebsfahrgangmenge größer ist als die Übersetzung des kleinsten Fahrgangs der Normalbetriebsfahrgangmenge. Auf diese Art und Weise kann beispielsweise das Anfahren des Kraftfahrzeugs in der Alternativbetriebsfahrgangmenge mit einem größeren Fahrgang vorgenommen werden als in der Normalbetriebsfahrgangmenge, wobei das Anfahren beziehungsweise der Anfahrvorgang mit dem kleinsten zur Verfügung stehenden Fahrgang der jeweiligen Fahrgangmenge durchgeführt wird.

In einer weiteren bevorzugten Ausgestaltung der Erfindung ist vorgesehen, dass der kleinste Fahrgang der Alternativbetriebsfahrgangmenge einem auf den kleinsten Fahrgang folgenden Fahrgang der Normalbetriebsfahrgangmenge entspricht. Auf eine derartige Vorgehensweise wurde bereits eingegangen. Anders ausgedrückt ist es vorgesehen, dass die Alternativbetriebsfahrgangmenge alle Fahrgänge der Normalbetriebsfahrgangmenge aufweist, mit Ausnahme des kleinsten Fahrgangs oder der kleinsten Fahrgänge. Beispielsweise entspricht also der kleinste Fahrgang der Alternativbetriebsfahrgangmenge dem unmittelbar auf den kleinsten Fahrgang folgenden Fahrgang der Normalbetriebsfahrgangmenge. Selbstverständlich können auch mehrere der kleinsten Fahrgänge in der Alternativbetriebsartfahrgangmenge nicht enthalten sein, sodass die Alternativbetriebsartfahrgangmenge alle Fahrgänge der Normalbetriebsartfahrgangmenge aufweist, mit Ausnahme einer Mehrzahl der kleinsten Fahrgänge, beispielsweise also mindestens zwei der kleinsten Fahrgänge.

Insoweit ist es beispielsweise vorgesehen, dass die Normalbetriebsfahrgangmenge zumindest die Fahrgänge "1", "2" und "3" (beliebig erweiterbar, beispielsweise auf vier Fahrgänge, fünf Fahrgänge, sechs Fahrgänge, sieben Fahrgänge, acht Fahrgänge oder neun Fahrgänge), während die Alternativbetriebsfahrgangmenge als kleinsten Fahrgang den Fahrgang "2" oder "3" (und zusätzlich die weiteren Fahrgänge der Normalbetriebsfahrgangmenge) aufweist, insgesamt also in ersterem Fall zumindest die Fahrgänge "2" und "3". Somit wird in der Alternativbetriebsart das Anfahren des Kraftfahrzeugs, bei welchem der kleinste zur Verfügung stehende Fahrgang eingelegt ist, mit einem größeren Fahrgang und entsprechend einer größeren Übersetzung vorgenommen als in der Normalbetriebsart.

Selbstverständlich kann es vorgesehen sein, dass der kleinste Fahrgang der Alternativbetriebsfahrgangmenge in Abhängigkeit von wenigstens einem Betriebszustand und/oder einem Betriebsparameter gewählt wird. Beispielsweise wird der kleinste Fahrgang der Alternativbetriebsfahrgangmenge umso größer gewählt, je höher die nach dem Anfahren im Durchschnitt maximal erreichte Fahrgeschwindigkeit ist.

Eine Weiterbildung der Erfindung sieht vor, dass der kleinste Fahrgang der Alternativbetriebsfahrgangmenge als Anfahrgang ausgelegt ist. Das bedeutet, dass der kleinste Fahrgang der Alternativbetriebsfahrgangmenge derart ausgewählt ist, dass das Anfahren des Kraftfahrzeugs zuverlässig möglich ist, wenn dieser Fahrgang an dem Getriebe eingestellt ist. Insoweit kann beispielsweise der kleinste Fahrgang der Alternativbetriebsfahrgangmenge auch in Abhängigkeit von der Untergrundneigung ausgewählt werden, wobei der kleinste Fahrgang der Alternativbetriebsfahrgangmenge bevorzugt umso größer gewählt wird, je stärker das Anfahren des Kraftfahrzeugs von einem Schwerkrafteinfluss unterstützt wird, beispielsweise weil das Kraftfahrzeug an einem abschüssigen Hang steht. Deutet die Untergrundneigung dagegen auf eine von dem Kraftfahrzeug während des Anfahrens zu bewältigende Steigung hin, so wird der kleinste Fahrgang der Alternativbetriebsfahrgangmenge umso kleiner gewählt, je größer die Untergrundneigung ist.

Erfindungsgemäß ist vorgesehen, dass die Alternativbetriebsdrehzahlobergrenze höher ist als die Normalbetriebsdrehzahlobergrenze. Das bedeutet, dass ein Wechsel des Fahrgangs in der Alternativbetriebsart später erfolgt als in der Normalbetriebsart. Insbesondere ist es vorgesehen, dass bei einem Beschleunigen des Kraftfahrzeugs, also bei steigender Drehzahl der Eingangswelle des Getriebes und/oder der Antriebseinrichtung, der momentan eingelegte beziehungsweise an dem Getriebe eingestellte Fahrgang länger gehalten wird, und insoweit erst bei höherer Drehzahl in einen größeren Fahrgang beziehungsweise einen Fahrgang mit größerer Übersetzung gewechselt wird.

Zusätzlich oder alternativ kann es auch vorgesehen sein, dass bei einem Verzögern des Kraftfahrzeugs, also bei kleiner werdender Drehzahl, der momentan eingelegte beziehungsweise an dem Getriebe eingestellte Fahrgang in analoger Weise länger gehalten wird. Entsprechend wird in der Alternativbetriebsart erst bei einer geringeren Drehzahl als in der Normalbetriebsart ein kleinerer Fahrgang beziehungsweise ein Fahrgang mit einer kleineren Übersetzung an dem Getriebe eingestellt.

Eine Weiterbildung der Erfindung sieht vor, dass in die Alternativbetriebsart umgeschaltet wird, wenn eine oder mehrere der folgenden Bedingungen zutreffen: An der Getriebeeinrichtung ist ein bestimmtes Fahrprogramm, insbesondere aus einer zulässigen Fahrprogrammmenge, oder ein bestimmter Fahrmodus eingestellt; und/oder eine Fahrgeschwindigkeit ist kleiner oder gleich einer Fahrgeschwindigkeitsschwelle; und/oder eine Untergrundneigung ist kleiner oder gleich einer Untergrundneigungsschwelle; und/oder eine Absolutbeschleunigung ist kleiner oder gleich einer Beschleunigungsschwelle; und/oder ein Lenkwinkel ist kleiner oder gleich einer Lenkwinkelschwelle; und/oder eine Fahrgangwechselhäufigkeit innerhalb der Fahrgangmenge und/oder einer Untermenge der Fahrgangmenge übersteigt eine Fahrgangwechselhäufigkeitsschwelle; und/oder eine Temperatur liegt innerhalb eines Temperaturbereichs; und/oder ein Integralwert der Fahrgeschwindigkeit liegt innerhalb eines Fahrgeschwindigkeitsbereichs; und/oder eine Fahrpedalstellung ist kleiner oder gleich einer Fahrpedalstellungsschwelle; und/oder ein zeitlicher Gradient der Fahrpedalstellung ist kleiner oder gleich einer Fahrpedalstellungsgradientenschwelle; und/oder ein Anhängerbetrieb liegt nicht vor; und/oder eine Fahrzeugmasse liegt innerhalb eines bestimmten Fahrzeugmassenbereichs.

Treffen eine oder mehrere der genannten Bedingungen zu, insbesondere alle der genannten Bedingungen, so kann in die Alternativbetriebsart gewechselt werden, beispielsweise aus der Normalbetriebsart. Die Getriebeeinrichtung kann beispielsweise über eine sogenannte "Shift by Wire"-Ansteuerung angesprochen werden. Das bedeutet, dass eine ausschließlich elektronische und/oder optische Kommunikation zwischen einem Wählhebel und der Getriebeeinrichtung vorliegt, insbesondere keine mechanische und/oder hydraulische Kommunikation. Der Wählhebel liegt jedoch bevorzugt auch bei anderen Ausgestaltungen der Ansteuerung vor, beispielsweise bei einer mechanischen und/oder manuellen Ansteuerung.

An dem Wählhebel kann ein Fahrer des Kraftfahrzeugs das gewünschte Fahrprogramm einstellen, insbesondere durch Verlagern des Wählhebels in eine bestimmte Stellung. Die Stellung des Wählhebels wird nun vorzugsweise elektronisch und/oder optisch, insbesondere ausschließlich auf diese Art, an die Getriebeeinrichtung übermittelt. Beispielsweise kann der Wählhebel in einer Parkstellung "P", einer Rückwärtsfahrstellung "R", einer Neutralstellung "N" sowie einer Vorwärtsfahrstellung "D" angeordnet sein. Diesen Stellungen entsprechend können ein Parkprogramm, ein Rückwärtsfahrprogramm, ein Neutralprogramm und ein Vorwärtsfahrprogramm vorliegen. Selbstverständlich kann das ausgeführte Programm auch auf andere Art und Weise ausgewählt werden.

Das vorstehend erwähnte Fahrprogramm liegt somit beispielsweise vor, wenn der Wählhebel in der Vorwärtsfahrstellung angeordnet ist, also die Getriebeeinrichtung für eine Vorwärtsfahrt des Kraftfahrzeugs eingestellt ist. In die Alternativbetriebsart kann nun lediglich dann umgeschaltet werden, wenn an der Getriebeeinrichtung das bestimmte Fahrprogramm, insbesondere das Vorwärtsfahrprogramm, eingestellt ist. Bei Auswahl des Rückwärtsfahrprogramms darf die Alternativbetriebsart vorzugsweise nicht durchgeführt werden beziehungsweise soll zurück in die Normalbetriebsart gewechselt werden.

Vorzugsweise kann zusätzlich oder alternativ ein Fahrmodus ausgewählt werden. Dieser beschreibt beispielsweise die gewünschte Fahrweise, also insbesondere sportlich, effizient oder automatisch. In letzterem Fall wird beispielsweise automatisch zwischen sportlicher und effizienter Fahrweise umgeschaltet oder übergeblendet, insbesondere stufenlos. Das Wechseln in die Alternativbetriebsart wird nun lediglich dann zugelassen oder durchgeführt, wenn der ausgewählte Fahrmodus dem bestimmten Fahrmodus entspricht. Beispielsweise entspricht der bestimmte Fahrmodus dem effizienten oder automatischen Fahrmodus. Die genannte Bedingung ist insoweit nur dann erfüllt, wenn der effiziente oder der automatische Fahrmodus ausgewählt ist. In dem sportlichen Fahrmodus soll die Alternativbetriebsart nicht durchgeführt werden. Selbstredend sind zahlreiche andere Fahrmodi realisierbar, in welchen die Alternativbetriebsart jeweils entweder durchgeführt oder nicht durchgeführt werden kann. Ganz allgemein können die Fahrmodi als erster Fahrmodus, zweiter Fahrmodus und so weiter bezeichnet werden.

Zusätzlich oder alternativ muss die Fahrgeschwindigkeit kleiner oder gleich der Fahrgeschwindigkeitsschwelle sein. Unter der Fahrgeschwindigkeit ist die momentane Fahrgeschwindigkeit, insbesondere eine Vorwärtsfahrgeschwindigkeit, des Kraftfahrzeugs zu verstehen. Die Fahrgeschwindigkeitsschwelle ist beispielsweise derart gewählt, dass bei einer Fahrgeschwindigkeit, die kleiner als die Fahrgeschwindigkeitsschwelle ist, auf eine Langsamfahrt des Kraftfahrzeugs mit häufigen Stopps beziehungsweise eine Stausituation geschlossen werden kann.

Zusätzlich oder alternativ soll die Untergrundneigung kleiner oder gleich der Untergrundneigungsschwelle sein. Unter der Untergrundneigung ist bevorzugt ein Absolutwert der Neigung eines Untergrunds zu verstehen, auf welchem sich das Kraftfahrzeug befindet. Liegt eine Untergrundneigung vor, die größer ist als die Untergrundneigungsschwelle, so soll vorzugsweise das Umschalten in die Alternativbetriebsart unterbunden werden. Zusätzlich oder alternativ muss die absolute Beschleunigung kleiner oder gleich der Beschleunigungswelle sein. Unter der Absolutbeschleunigung ist der Absolutwert einer Beschleunigung des Kraftfahrzeugs zu verstehen. Die Absolutbeschleunigung weist insoweit stets positive Werte beziehungsweise Werte größer oder gleich Null auf, unabhängig davon, ob das Kraftfahrzeug beschleunigt oder verzögert, also schneller oder langsamer wird.

Zusätzlich oder alternativ wird überprüft, ob der Lenkwinkel kleiner oder gleich der Lenkwinkelschwelle ist. Das Umschalten in die Alternativbetriebsart soll bevorzugt unterbunden werden, wenn der Lenkwinkel größer als die Lenkwinkelschwelle ist. Die Lenkwinkelschwelle wird beispielsweise in Abhängigkeit von der Fahrgeschwindigkeit oder dem Integralwert der Fahrgeschwindigkeit gewählt. Insbesondere ist die Lenkwinkelschwelle bei niedrigeren Werten der Fahrgeschwindigkeit und/oder des Integralwerts größer als bei größeren Werten. Bei niedrigeren Fahrgeschwindigkeiten wird insoweit ein größerer Lenkwinkel zugelassen als bei höheren Fahrgeschwindigkeiten, sodass die Alternativbetriebsart beispielsweise auch im Stadtverkehr zugelassen wird, nicht jedoch bei einer Autobahnfahrt. Bedingt durch die kleinere Lenkwinkelschwelle wird vorzugsweise die Alternativbetriebsart beendet, wenn das Kraftfahrzeug auf eine Autobahnausfahrt abbiegt.

Zusätzlich oder alternativ wird überprüft, ob die Fahrgangwechselhäufigkeit innerhalb der Fahrgangmenge und/oder der Untermenge der Fahrgangmenge die Fahrgangwechselhäufigkeitswelle übersteigt. Ist dies der Fall, kann beziehungsweise soll in die Alternativbetriebsart umgeschaltet werden. Unter der Fahrgangwechselhäufigkeit ist die Anzahl der Fahrgangwechsel innerhalb einer bestimmten Zeitspanne zu verstehen. Dabei kann die Fahrgangwechselhäufigkeit entweder bezogen auf die gesamte Fahrgangmenge oder lediglich bezogen auf die Untermenge der Fahrgangmenge ausgewertet werden. In der Untermenge der Fahrgangmenge ist lediglich ein Teil der Fahrgänge in der Fahrgangmenge enthalten. Besonders bevorzugt umfasst die Untermenge lediglich die niedrigsten Fahrgänge der Fahrgangmenge.

Zusätzlich oder alternativ muss die Temperatur innerhalb des Temperaturbereichs liegen. Die Temperatur ist beispielsweise eine Außentemperatur oder eine Temperatur der Getriebeeinrichtung oder eine Schmiermitteltemperatur, insbesondere eines Getriebeöls oder eines Motoröls, oder eine Kühlmitteltemperatur, insbesondere von Motorkühlwasser. Weil in der Alternativbetriebsart das Anfahren des Kraftfahrzeugs nicht in dem kleinsten zur Verfügung stehenden Fahrgang vorgenommen wird, entsteht mehr durch Reibung bedingte Wärme in der Getriebeeinrichtung als in der Normalbetriebsart, insbesondere in einem Anfahrelement, beispielsweise einer Anfahrkupplung, der Getriebeeinrichtung. Liegt nun die Temperatur außerhalb des Temperaturbereichs, welcher beispielsweise die zulässige Betriebstemperatur der Getriebeeinrichtung oder des Anfahrelements beziehungsweise der Anfahrkupplung beschreibt, so wird vorzugsweise das Umschalten in die Alternativbetriebsart unterbunden und anderenfalls zugelassen.

Zusätzlich oder alternativ kann der Integralwert der Fahrgeschwindigkeit mit dem Fahrgeschwindigkeitsbereich verglichen werden. Der Integralwert entspricht dem Integral der Fahrgeschwindigkeit über einen bestimmten Zeitraum. Anhand des Integralwerts kann insoweit auf eine mittlere Fahrgeschwindigkeit des Kraftfahrzeugs geschlossen werden. Insbesondere kann festgestellt werden, ob das Kraftfahrzeug bei niedrigen Fahrgeschwindigkeiten und/oder mit häufigen Stillstandsphasen betrieben wird. Liegt der Integralwert der Fahrgeschwindigkeit innerhalb des Fahrgeschwindigkeitsbereichs und/oder ist kleiner oder gleich der Fahrgeschwindigkeitsschwelle, so soll das Umschalten in die Alternativbetriebsart zugelassen beziehungsweise durchgeführt werden. Aus dem Integralwert kann beispielsweise darauf geschlossen werden, wo sich das Kraftfahrzeug befindet. Insbesondere wird auf einen Straßentyp geschlossen. Dabei kann anhand des Integralwerts der Straßentyp auf Autobahn, Landstraße oder Stadt gesetzt beziehungsweise aus diesen ausgewählt werden. Auch weitere oder andere Straßentypen können festgelegt werden. Anhand des Integralwerts und/oder des Straßentyps können wenigstens ein Grenzwert und/oder der Fahrmodus gesetzt werden. Allgemein können die Straßentypen als erster Straßentyp, zweiter Straßentyp und so weiter bezeichnet werden.

Weiterhin kann überprüft werden, ob die Fahrpedalstellung kleiner oder gleich der Fahrpedalstellungsschwelle ist. Unter dem Fahrpedal ist beispielsweise ein Gaspedal des Kraftfahrzeugs zu verstehen. Die Fahrpedalstellung gibt insoweit die Stellung des Gaspedals wieder. Je stärker das Fahrpedal betätigt wird, umso größer ist die Fahrpedalstellung. Das Umschalten in die Alternativbetriebsart soll nun besonders bevorzugt lediglich dann zugelassen oder durchgeführt werden, wenn diese kleiner oder gleich der Fahrpedalstellungsschwelle ist. Zusätzlich oder alternativ kann überprüft werden, ob der zeitliche Gradient der Fahrpedalstellung kleiner oder gleich der Fahrpedalstellungsgradientenschwelle ist. Unter dem Gradient ist der zeitliche Gradient der Fahrpedalstellung zu verstehen. Er ist umso größer, je schneller das Fahrpedal betätigt oder gelöst wird. Der Gradient beschreibt insoweit eine Fahrpedalbetätigungsgeschwindigkeit oder eine Fahrpedalbetätigungsbeschleunigung.

Es kann auch vorgesehen sein, das Umschalten in die Alternativbetriebsart vorzunehmen oder zuzulassen, wenn der Anhängerbetrieb nicht vorliegt. Unter dem Anhängerbetrieb wird die Verwendung des Kraftfahrzeugs als Zugmaschine verstanden. In dem Anhängerbetrieb ist insoweit wenigstens ein Anhänger mit dem Kraftfahrzeug gekoppelt, insbesondere derart gekoppelt, dass der Anhänger mittels des Kraftfahrzeugs gezogen beziehungsweise geschleppt werden kann. Der Anhängerbetrieb liegt nun beispielsweise vor, wenn festgestellt wird, dass der Anhänger an das Kraftfahrzeug angekoppelt ist, beispielsweise mittels einer Anhängerkupplung. Insbesondere wird die Anhängerkupplung auf das Koppeln mit dem Anhänger überprüft und auf den Anhängerbetrieb erkannt, wenn die Anhängerkupplung zum Ankoppeln des Anhängers eingestellt ist.

Auch kann vorgesehen sein, die Fahrzeugmasse darauf zu überprüfen, ob sie in dem bestimmten Fahrzeugmassenbereich liegt, also größer oder gleich einer unteren Grenze und/oder kleiner oder gleich einer oberen Grenze des Fahrzeugmassenbereichs ist. Der Fahrzeugmassenbereich umfasst idealerweise eine Leermasse des Kraftfahrzeugs. Beispielsweise entspricht die untere Grenze der Leermasse oder ist etwas kleiner als diese. Zusätzlich oder alternativ kann die obere Grenze eine maximal zulässige Masse des Kraftfahrzeugs oder eine Masse bei maximaler Zuladung sein. Ist die Bedingung erfüllt, so kann die Alternativart eingeleitet oder das Einleiten zugelassen werden.

Insbesondere wenigstens einer der vorstehend genannten Grenzwerte, insbesondere mehrere der genannten Grenzwerte, insbesondere alle der genannten Grenzwerte, können grundsätzlich beliebig gewählt sein. Unter den Grenzwerten sind dabei die Fahrgeschwindigkeitsschwelle, die Untergrundneigungsschwelle, die Beschleunigungsschwelle, die Lenkwinkelschwelle, die Fahrgangwechselhäufigkeitsschwelle, der Temperaturbereich, die Fahrpedalstellungsschwelle und die Fahrpedalstellungsgradientenschwelle zu verstehen. Selbstverständlich kann wenigstens einer der genannten Grenzwerte, vorzugsweise mehrere der genannten Grenzwerte oder alle genannten Grenzwerte auch in Abhängigkeit von wenigstens einer Betriebsgröße und/oder einer Zustandsgröße, beispielsweise der Getriebeeinrichtung oder des Kraftfahrzeugs, ermittelt werden. Im speziellen kann der Grenzwert beziehungsweise können die Grenzwerte in Abhängigkeit von dem Integralwert der Fahrzeuggeschwindigkeit und/oder dem Straßentyp gewählt werden. Das für die Grenzwerte gesagte kann analog auch für den Fahrmodus herangezogen werden.

Eine weitere Ausgestaltung der Erfindung sieht vor, dass in die Alternativbetriebsart gewechselt wird, wenn ein Zähler einer Fahrgeschwindigkeitsverlaufsanalyse einen Zählerschwellenwert erreicht oder überschreitet, insbesondere nur wenn ein Fahrprogramm einem Vorwärtsfahrprogramm entspricht oder ein Vorwärtsfahrgang eingelegt ist, und/oder wenn eine Alternativbetriebsartanforderung vorliegt. Um zu überprüfen, ob der Wechsel in die Alternativbetriebsart durchgeführt werden soll, wird also zum Beispiel zunächst die Fahrgeschwindigkeitsverlaufsanalyse durchgeführt. In diesem Rahmen wird der Zähler bestimmt, welcher vorzugsweise entweder inkrementiert oder zurückgesetzt werden kann. Beispielsweise wird der Zähler bei Fahrtbeginn oder beim Einleiten der Fahrgeschwindigkeitsverlaufsanalyse zurückgesetzt, also auf einen Ausgangswert gesetzt, beispielsweise auf null.

Unter bestimmten Bedingungen kann der Zähler inkrementiert werden. Erreicht oder überschreitet der Zähler den Zählerschwellenwert, welcher konstant festgelegt oder variabel gewählt sein kann, so soll in die Alternativbetriebsart gewechselt werden. Besonders bevorzugt wird der Wechsel in die Alternativbetriebsart jedoch nur dann durchgeführt, wenn sowohl der Zähler den Zählerschwellenwert erreicht beziehungsweise überschreitet und gleichzeitig das momentane Fahrprogramm dem Vorwärtsfahrprogramm entspricht beziehungsweise wenn momentan ein Vorwärtsfahrgang eingelegt ist. Dies hat den Hintergrund, dass das Durchführen der Alternativbetriebsart normalerweise nur im Stop and Go-Verkehr beziehungsweise in einer Stausituation vorgenommen werden soll, also bei häufigen Stopps des Kraftfahrzeugs in der Vorwärtsfahrrichtung.

Zusätzlich oder alternativ kann selbstverständlich die Alternativbetriebsart eingeleitet werden, wenn die Alternativbetriebsartanforderung auftritt. Dies kann beispielsweise aufgrund einer expliziten Anforderung des Fahrers der Fall sein. Die Alternativbetriebsartanforderung kann jedoch auch durch ein Steuergerät ausgelöst werden, beispielsweise aufgrund einer Umfelderkennung, welche mithilfe wenigstens eines Sensors vorgenommen wird. Beispielsweise wird mit Hilfe der Umfelderkennung eine Verkehrsdichte in der Umgebung des Kraftfahrzeugs ermittelt. Übersteigt diese einen bestimmten Verkehrsdichteschwellenwert, so kann dies ein Indiz dafür sein, dass Stop and Go-Verkehr beziehungsweise die Stausituation vorliegt. Es kann auch vorgesehen sein, dass sowohl der Zähler den Zählerschwellenwert erreicht beziehungsweise überschritten haben als auch die Alternativbetriebsartanforderung vorliegen muss.

Eine bevorzugte Ausgestaltung der Erfindung sieht vor, dass die Fahrgeschwindigkeitsverlaufsanalyse eingeleitet wird, wenn ein Anfahrkennwert kleiner ist als eine Anfahrkennwertschwelle. Der Anfahrkennwert wird vorzugsweise während eines Fahrbetriebs des Kraftfahrzeugs permanent oder periodisch ermittelt. Ist der Anfahrkennwert kleiner als die Anfahrkennwertschwelle, so wird die Fahrgeschwindigkeitsverlaufsanalyse eingeleitet. Die Anfahrkennwertschwelle ist beispielsweise fest vorgegeben. Sie kann jedoch alternativ auch variabel ermittelt werden.

Eine bevorzugte Ausgestaltung der Erfindung sieht vor, dass falls die Fahrgeschwindigkeit des Kraftfahrzeugs ausgehend von einem ersten Fahrgeschwindigkeitswert auf einen größeren zweiten Fahrgeschwindigkeitswert erhöht und anschließend wieder verringert wird oder konstant bleibt, der Anfahrkennwert aus der maximalen Fahrpedalstellung und/oder dem maximalen Fahrgeschwindigkeitsgradient während der Fahrgeschwindigkeitserhöhung ermittelt wird. Bei einer Analyse von durchgeführten Messfahrten konnte festgestellt werden, dass die maximalen Werte der Fahrpedalstellung in Stausituationen häufig wesentlich niedriger sind als bei sonstigen Anfahrten beziehungsweise Beschleunigungen des Kraftfahrzeugs. Dies hat den Hintergrund, dass der Fahrer bereits weiß, dass er gleich wieder abbremsen muss. Entsprechend wird er das Fahrpedal in geringerem Ausmaß betätigen als sonst, um eine geringere Beschleunigung des Kraftfahrzeugs zu bewirken.

Während der gesamten Fahrt des Kraftfahrzeugs werden Anfahrvorgänge mit bestimmten Kriterien aufgenommen und die maximale Fahrpedalstellung der Anfahrvorgänge gespeichert. Dabei wird der größte Fahrgeschwindigkeitsgradient währen des jeweiligen Anfahrvorgangs ermittelt. Der Fahrgeschwindigkeitsgradient kann anschließend dem Anfahrkennwert zugrunde gelegt werden. Zusätzlich oder alternativ kann bei der Ermittlung des Anfahrkennwerts die maximale Fahrpedalstellung berücksichtigt werden. Beispielsweise ist es vorgesehen, den maximalen Fahrgeschwindigkeitsgradienten durch einen festlegbaren Teiler zu dividieren, beispielsweise durch zwei, damit der Fahrgeschwindigkeitsgradient keinen zu großen Einfluss hat, und zu der maximalen Fahrpedalstellung zu addieren oder von dieser zu subtrahieren. Selbstverständlich kann zuvor eine Normalisierung der maximalen Fahrpedalstellung und/oder des maximalen Fahrgeschwindigkeitsgradienten vorgenommen werden, insbesondere um diese Größen einheitenlos zu machen.

Zunächst wird also festgestellt, ob sich die Fahrgeschwindigkeit des Kraftfahrzeugs erhöht. Dabei wird der erste Fahrgeschwindigkeitswert festgehalten, von welchem ausgehend die Erhöhung der Fahrgeschwindigkeit erfolgt. Der erste Fahrgeschwindigkeitswert ist insoweit bevorzugt ein lokales Minimum der Fahrgeschwindigkeit. Neben dem ersten Fahrgeschwindigkeitswert wird der zweite Fahrgeschwindigkeitswert festgehalten, welcher der größten Fahrgeschwindigkeit während des Erhöhens der Fahrgeschwindigkeit entspricht. Entsprecht liegt bevorzugt ein lokales Maximum der Fahrgeschwindigkeit vor. Nach dem Erreichen des zweiten Fahrgeschwindigkeitswerts durch die Fahrgeschwindigkeit verringert sich insoweit die Fahrgeschwindigkeit wieder oder bleibt zumindest konstant. Das Ermitteln des Anfahrkennwerts erfolgt also lediglich bei einem tatsächlichen Anfahren beziehungsweise Beschleunigen des Kraftfahrzeugs, welches zunächst eine dem ersten Fahrgeschwindigkeitswert entsprechende Fahrgeschwindigkeit aufweist und nachfolgend auf eine Fahrgeschwindigkeit beschleunigt, welche dem größeren zweiten Fahrgeschwindigkeitswert entspricht.

Im Rahmen einer weiteren Ausgestaltung der Erfindung kann vorgesehen sein, dass der Anfahrkennwert nur erfasst wird, wenn die Fahrpedalstellung bei Vorliegen des ersten Fahrgeschwindigkeitswerts kleiner ist als die Fahrpedalstellungsschwelle. Liegt beispielsweise eine Vollgasanfahrt vor, so ist ohne weiteres erkennbar, dass der dabei ermittelte Kennwert für die Durchführung der Alternativbetriebsart beziehungsweise die Erkennung einer Stausituation nicht relevant ist. Entsprechend wird das Erfassen des Anfahrkennwerts ausgesetzt, wenn die Fahrpedalstellung zu Beginn der Fahrgeschwindigkeitserhöhung die Fahrpedalstellungsschwelle überschreitet. Die Fahrpedalstellungsschwelle kann grundsätzlich beliebig gewählt sein. Beispielsweise entspricht sie einem nicht betätigten Fahrpedal. In diesem Fall wird der Anfahrkennwert also nur dann erfasst, wenn die Fahrgeschwindigkeit ausgehend von einer dem ersten Fahrgeschwindigkeitswert entsprechenden Fahrgeschwindigkeit beginnt, während das Fahrpedal nicht oder allenfalls geringfügig betätigt ist.

Eine weitere bevorzugte Ausführungsform der Erfindung sieht vor, dass der Anfahrkennwert nur erfasst wird, wenn die Fahrgeschwindigkeit nach dem Erreichen des zweiten Fahrgeschwindigkeitswerts um einen bestimmten Anteil, beispielweise um wenigstens 5 %, wenigstens 10 %, wenigstens 15 %, wenigstens 20 % oder wenigstens 25 %, reduziert wird. Es ist insoweit nicht ausreichend, wenn die Fahrgeschwindigkeit nach der Fahrgeschwindigkeitserhöhung konstant bleibt. Vielmehr soll eine maßgebliche Reduzierung vorliegen, damit tatsächlich ein für den Stop and Go-Verkehr beziehungsweise die Stausituation relevanter Anfahrkennwert erfasst werden kann.

Eine weitere Ausgestaltung der Erfindung sieht vor, dass die Anfahrkennwertschwelle aus wenigstens einem vorhergehend ermittelten Anfahrkennwert bestimmt wird, insbesondere aus mehreren vorhergehend ermittelten Anfahrkennwerten. Beispielsweise entspricht die Anfahrkennwertschwelle einem beliebigen vorhergehend ermittelten Anfahrkennwert, beispielsweise dem ersten während des Fahrbetriebs erfassten Anfahrkennwert oder dem zuletzt ermittelten Anfahrkennwert. Besonders bevorzugt fließen in die Anfahrkennwertschwelle jedoch mehrere Anfahrkennwerte ein, beispielsweise mehrere der zuletzt ermittelten Anfahrkennwerte. Beispielsweise entspricht die Anfahrkennwertschwelle dem Mittelwert, insbesondere dem gewichteten Mittelwert, der zuletzt ermittelten Anfahrkennwerte. Alternativ ist auch die Verwendung des Medians der vorhergehend ermittelten Anfahrkennwerte möglich, sofern eine ausreichende Anzahl erfasst wurde. Beispielsweise werden wenigstens vier der unmittelbar vorhergehend ermittelten Anfahrkennwerte bei der Bestimmung der Anfahrkennwertschwelle berücksichtigt.

Eine Weiterbildung der Erfindung sieht vor, dass ein Fahrgeschwindigkeitswertepaar mit einem ersten Fahrgeschwindigkeitsgrenzwert und einem zweiten Fahrgeschwindigkeitsgrenzwert vorgesehen ist, wobei bei einem Unterschreiten des ersten Fahrgeschwindigkeitsgrenzwerts durch den ersten Fahrgeschwindigkeitswert und einem Überschreiten des zweiten Fahrgeschwindigkeitsgrenzwerts durch den zweiten Fahrgeschwindigkeitswert bei der Fahrgeschwindigkeitserhöhung der Zähler inkrementiert wird. Um zu überprüfen, ob der Zähler der Fahrgeschwindigkeitsverlaufsanalyse inkrementiert werden soll, wird also auf das Fahrgeschwindigkeitswertepaar einerseits sowie auf den ersten Fahrgeschwindigkeitswert und den zweiten Fahrgeschwindigkeitswert andererseits zurückgegriffen.

Der erste Fahrgeschwindigkeitswert und der zweite Fahrgeschwindigkeitswert werden beziehungsweise wurden während der Fahrgeschwindigkeitserhöhung ermittelt. Der erste Fahrgeschwindigkeitswert entspricht insoweit derjenigen Fahrgeschwindigkeit des Kraftfahrzeugs, ausgehend von welcher die Fahrgeschwindigkeitserhöhung erfolgt, und der zweite Fahrgeschwindigkeitswert der Fahrgeschwindigkeit, bis zu welcher die Fahrgeschwindigkeitserhöhung durchgeführt wird. Das Fahrgeschwindigkeitswertepaar umfasst den ersten Fahrgeschwindigkeitsgrenzwert und den zweiten Fahrgeschwindigkeitsgrenzwert. Wird nun festgestellt, dass der erste Fahrgeschwindigkeitswert kleiner ist als der erste Fahrgeschwindigkeitsgrenzwert und ist gleichzeitig der zweite Fahrgeschwindigkeitswert größer als der zweite Fahrgeschwindigkeitsgrenzwert, so wird der Zähler inkrementiert. Anhand dieser Vorgehensweise wird ein sogenannter "Geschwindigkeitshügel" erkannt, bei welchem aus einem "Fahrgeschwindigkeitstal" bis zu einem "Fahrgeschwindigkeitsberg" beschleunigt wird.

Zusätzlich oder alternativ kann vorgesehen sein, dass mehrere Fahrgeschwindigkeitswertepaare mit jeweils einem ersten Fahrgeschwindigkeitsgrenzwert und einem zweiten Fahrgeschwindigkeitsgrenzwert vorgesehen sind, wobei aus den mehreren Fahrgeschwindigkeitswertepaaren dasjenige Fahrgeschwindigkeitswertepaar ausgewählt wird, welches den kleinsten von dem ersten Fahrgeschwindigkeitswert unterschrittenen ersten Fahrgeschwindigkeitsgrenzwert aufweist, und wobei bei einem Überschreiten des zweiten Fahrgeschwindigkeitsgrenzwerts des ausgewählten Fahrgeschwindigkeitswertepaars durch den zweiten Fahrgeschwindigkeitswert bei der Fahrgeschwindigkeitserhöhung der Zähler inkrementiert wird. Grundsätzlich ist die Vorgehensweise analog zu der vorstehend beschriebenen. Der Unterschied liegt lediglich darin, dass mehrere unterschiedliche Fahrgeschwindigkeitswertepaare vorliegen, aus welchen jeweils eines anhand des ersten Fahrgeschwindigkeitswerts ausgewählt wird.

Das Auswählen erfolgt dabei nach dem Kriterium, dass das ausgewählte Fahrgeschwindigkeitswertepaar den kleinsten, noch von dem ersten Fahrgeschwindigkeitswertepaar unterschrittenen ersten Fahrgeschwindigkeitsgrenzwert der mehreren Fahrgeschwindigkeitswertepaare aufweist. In anderen Worten wird geprüft, welche der ersten Fahrgeschwindigkeitsgrenzwerte der Fahrgeschwindigkeitswertepaare durch den ersten Fahrgeschwindigkeitswert unterschritten werden. Anschließend wird aus den Fahrgeschwindigkeitswertepaaren, für welche dies zutrifft, dasjenige Fahrgeschwindigkeitswertepaar ausgewählt, welches den kleinsten ersten Fahrgeschwindigkeitsgrenzwert aufweist. Nachfolgend wird analog zu der vorstehend beschriebenen Vorgehensweise vorgegangen, also der Zähler inkrementiert, sofern der zweite Fahrgeschwindigkeitswert den zweiten Fahrgeschwindigkeitsgrenzwert des ausgewählten Fahrgeschwindigkeitswertepaars überschreitet.

Bevorzugt kann es vorgesehen sein, dass die mehreren Fahrgeschwindigkeitswertepaare unterschiedliche erste Fahrgeschwindigkeitsgrenzwerte und/oder unterschiedliche zweite Fahrgeschwindigkeitsgrenzwerte aufweisen. Beispielsweise kann es vorgesehen sein, dass die ersten Fahrgeschwindigkeitsgrenzwerte und die zweiten Fahrgeschwindigkeitsgrenzwerte der Fahrgeschwindigkeitswertepaare derart gewählt sind, dass sie nicht miteinander überlappen, also der erste Fahrgeschwindigkeitsgrenzwert eines der Fahrgeschwindigkeitswertepaare größer ist als der zweite Fahrgeschwindigkeitsgrenzwert eines anderen Fahrgeschwindigkeitswertepaars.

Alternativ kann selbstverständlich der erste Fahrgeschwindigkeitsgrenzwert eines der Fahrgeschwindigkeitswertepaare zwischen dem ersten Fahrgeschwindigkeitsgrenzwert und dem zweiten Fahrgeschwindigkeitsgrenzwert eines anderen der Fahrgeschwindigkeitswertepaare liegen. Beispielsweise sind zwei Fahrgeschwindigkeitswertepaare vorgesehen. Für ein erstes betragen der erste Fahrgeschwindigkeitsgrenzwert und der zweite Fahrgeschwindigkeitsgrenzwert 3 km/h und 6 km/h sowie für einen zweiten 8 km/h und 13 km/h. Diese Werte sind jedoch selbstverständlich beliebig wählbar und hier lediglich beispielhaft wiedergegeben.

Eine besonders bevorzugte Ausführungsform der Erfindung sieht vor, dass der Zähler nur dann inkrementiert wird, wenn die Fahrgeschwindigkeit unmittelbar vor oder während der Fahrgeschwindigkeitserhöhung zumindest eine bestimmte Zeitspanne kleiner ist als der erste Fahrgeschwindigkeitsgrenzwert. Die Dauer der bestimmten Zeitspanne beträgt dabei nicht null, sondern beispielsweise mindestens 1 Sekunde, mindestens 2 Sekunden, mindestens 3 Sekunden, mindestens 4 Sekunden oder mindestens 5 Sekunden. Auf diese Art und Weise wird die fälschliche Erkennung eines Fahrgeschwindigkeitshügels beziehungsweise im Endeffekt einer Stausituation effektiv verhindert.

Im Rahmen einer vorteilhaften Weiterbildung der Erfindung ist vorgesehen, dass der Zählerschwellenwert anhand des Straßentyps, insbesondere eines Autobahnflags, und/oder eines Hystereseflags ermittelt wird, insbesondere ausgehend von einem konstanten Wert verringert wird, wenn der Straßentyp auf eine Autobahn hinweist oder das Hystereseflag auf ein vorhergehendes Durchführen der Alternativbetriebsart innerhalb einer bestimmten Hysteresezeitspanne hinweist. Der Wechsel in die Alternativbetriebsart kann zum Beispiel vereinfacht werden, wenn entweder feststeht, dass sich das Kraftfahrzeug auf einer Autobahn bewegt oder wenn bereits zuvor die Alternativbetriebsart durchgeführt wurde, derzeit jedoch wieder die Normalbetriebsart vorliegt. Hierzu wird der Zählerschwellenwert unter Verwendung des Straßentyps beziehungsweise des Hystereseflags bestimmt.

Der Straßentyp liegt beispielsweise in Form des Autobahnflags vor, welches gesetzt ist, sofern sich das Kraftfahrzeug auf einer Autobahn bewegt. Bevorzugt ist es vorgesehen, den Zählerschwellenwert zunächst auf einen konstanten Wert zu setzen und ihn nur dann zu verringern, wenn entweder der Straßentyp auf die Autobahn hinweist, beispielsweise also das Autobahnflag gesetzt ist, oder alternativ das Hystereseflag gesetzt ist. Selbstverständlich kann es auch vorgesehen sein, dass der Zählerschwellenwert lediglich dann verringert wird, wenn beide Bedingungen erfüllt sind.

Beispielsweise ist in einer weiteren Ausführungsform der Erfindung vorgesehen, dass das Autobahnflag gesetzt wird, wenn die Fahrgeschwindigkeit eine Autobahnfahrgeschwindigkeitsschwelle für eine bestimmte Mindestzeitdauer übersteigt. Selbstverständlich kann grundsätzlich das Autobahnflag auf beliebige Art und Weise bestimmt werden. Beispielsweise wird es gesetzt, wenn anhand einer Navigationseinrichtung des Kraftfahrzeugs erkannt wird, dass sich das Kraftfahrzeug auf einer Autobahn befindet. Auch andere Bedingungen können herangezogen werden.

Weil jedoch nicht in jedem Kraftfahrzeug eine solche Navigationseinrichtung zur Verfügung steht und/oder das verwendete Kartenmaterial nicht entsprechend aufbereitet ist, kann es notwendig sein, das Autobahnflag auf andere Art und Weise zu ermitteln. Eine einfache und zuverlässige Vorgehensweise hierzu stellt dar, das Autobahnflag zu setzen, wenn die Fahrgeschwindigkeit größer ist als die Autobahnfahrgeschwindigkeitsschwelle und dieser Zustand über die bestimmte Mindestzeitdauer hinweg vorliegt. Als Autobahnfahrgeschwindigkeitsschwelle kann beispielsweise eine Fahrgeschwindigkeit von mindestens 80 km/h, mindestens 90 km/h, mindestens 100 km/h, mindestens 110 km/h oder mindestens 120 km/h verwendet werden. Die bestimmte Mindestzeitdauer beträgt beispielsweise mindestens 15 Sekunden, mindestens 30 Sekunden, mindestens 40 Sekunden, mindestens 50 Sekunden oder mindestens 60 Sekunden.

Im Rahmen einer weiteren Ausgestaltung der Erfindung ist vorgesehen, dass das Autobahnflag zurückgesetzt wird, wenn der Lenkwinkel einen bestimmten Austrittslenkwinkel überschreitet. Besonders bevorzugt wird das Autobahnflag nur bei Zutreffen dieser Bedingung zurückgesetzt. Alternativ ist es selbstverständlich möglich, das Autobahnflag auf Grundlage der vorstehend beschriebenen Navigationseinrichtung zurückzusetzen, sofern festgestellt wird, dass sich das Kraftfahrzeug nicht mehr auf einer Autobahn befindet. Das Heranziehen des Lenkwinkels ermöglicht jedoch eine einfache und zuverlässige Erkennung, ob der Straßentyp einer Autobahn entspricht. Beispielsweise beschreibt der Lenkwinkel eine Stellung eines Lenkrads des Kraftfahrzeugs. Als bestimmter Austrittslenkwinkel wird beispielsweise ein Lenkwinkel von mindestens 60°, mindestens 75°, mindestens 90°, mindestens 100°, mindestens 110°, mindestens 120°, mindestens 130°, mindestens 140°, mindestens 150° oder mindestens 160° verwendet. Ein solcher Lenkwinkel deutet einen Abbiegevorgang des Kraftfahrzeugs an. Der Lenkwinkel bei einer Geradeausfahrt des Kraftfahrzeugs beträgt beispielsweise genau 0°.

Eine bevorzugte Weiterbildung der Erfindung sieht vor, dass das Hystereseflag gesetzt wird, wenn in die Alternativbetriebsart gewechselt wird oder wenn die Alternativbetriebsart verlassen wird. Um erkennen zu können, ob bereits zuvor die Alternativbetriebsart durchgeführt wurde, wird bei jedem Einleiten der Alternativbetriebsart beziehungsweise bei jedem Verlassen der Alternativbetriebsart das Hystereseflag gesetzt. Zusätzlich oder alternativ wird das Hystereseflag zurückgesetzt, wenn die Hysteresezeitspanne ohne Wechsel in die Alternativbetriebsart verstrichen ist.

In einer weiteren bevorzugten Ausführungsform der Erfindung ist vorgesehen, dass in die Normalbetriebsart umgeschaltet wird, wenn eine oder mehrere der folgenden Bedingungen zutreffen: An der Getriebeeinrichtung ist ein von dem bestimmten Fahrprogramm verschiedenes Fahrprogramm und/oder ein von dem bestimmten Fahrmodus verschiedener Fahrmodus eingestellt; und/oder die Fahrgeschwindigkeit ist größer als die Fahrgeschwindigkeitsschwelle; und/oder die Untergrundneigung ist größer als die Untergrundneigungsschwelle; und/oder die Absolutbeschleunigung ist größer als die Beschleunigungsschwelle; und/oder der Lenkwinkel ist größer als die Lenkwinkelschwelle; und/oder die Fahrgangwechselhäufigkeit innerhalb der Fahrgangmenge und/oder der Untermenge der Fahrgangmenge ist kleiner oder gleich der Fahrgangwechselhäufigkeitsschwelle; und/oder die Temperatur liegt außerhalb des Temperaturbereichs; und/oder der Integralwert der Fahrgeschwindigkeit liegt außerhalb des Fahrgeschwindigkeitsbereichs; und/oder die Fahrpedalstellung ist größer als die Fahrpedalstellungsschwelle; und/oder der zeitliche Gradient der Fahrpedalstellung ist größer als die Fahrpedalstellungsgradientenschwelle; und/oder der Anhängerbetrieb liegt vor; und/oder die Fahrzeugmasse liegt außerhalb des bestimmten Fahrzeugmassenbereichs; und/oder Auswahl eines Rückwärtsfahrprogramms oder Einlegen eines Rückwärtsfahrgangs. Auch aufgrund der Umfelderkennung kann in die Normalbetriebsart umgeschaltet werden, zum Beispiel, wenn die Umfelderkennung eine Verkehrsdichte feststellt, die den bestimmten Verkehrsdichteschwellenwert unterschreitet.

Hierzu wird im Wesentlichen auf die vorstehenden Ausführungen verwiesen. Das Umschalten in die Normalbetriebsart, vorzugsweise aus der Alternativbetriebsart, wird vorzugsweise bereits dann vorgenommen, wenn lediglich eine einzige der genannten Bedingungen erfüllt ist. Es kann jedoch alternativ vorgesehen sein, dass das Umschalten nur dann vorgenommen wird, wenn wenigstens eine der genannten Bedingungen, insbesondere mehrere der genannten Bedingungen, besonders bevorzugt alle der genannten Bedingungen, erfüllt sind.

Im Rahmen einer bevorzugten Ausführungsform der Erfindung ist vorgesehen, dass in die Normalbetriebsart gewechselt und/oder der Zähler zurückgesetzt wird, wenn der Lenkwinkel den bestimmten Austrittslenkwinkel überschreitet; und/oder wenn die Fahrgeschwindigkeit größer ist als eine erste Fahrgeschwindigkeitsschwelle; und/oder wenn die Fahrgeschwindigkeit über eine bestimmte Zeitdauer, insbesondere über die Mindestzeitdauer, größer ist als eine zweite Fahrgeschwindigkeitsschwelle, die kleiner ist als die erste Fahrgeschwindigkeitsschwelle; und/oder bei Auswahl eines Rückwärtsfahrprogramms oder Einlegen eines Rückwärtsfahrgangs, insbesondere bei gleichzeitiger Überschreitung einer weiteren Fahrgeschwindigkeitsschwelle durch die Fahrgeschwindigkeit; und/oder wenn der Anfahrkennwert größer ist als eine Anfahrkennwertaustrittsschwelle.

Die Durchführung der Alternativbetriebsart ist beispielsweise nicht sinnvoll, wenn ein Rangierbetrieb des Kraftfahrzeugs vorliegt. Dieser kann anhand des Lenkwinkels erkannt werden. Beispielsweise ist die Bedingung erfüllt, wenn der bestimmte Austrittslenkwinkel durch den Lenkwinkel überschritten wird. Zusätzlich oder alternativ kann überprüft werden, ob die Fahrgeschwindigkeit größer ist als die erste Fahrgeschwindigkeitsschwelle. Die erste Fahrgeschwindigkeitsschwelle kann derart gewählt sein, dass sie auf eine normale Reisegeschwindigkeit des Kraftfahrzeugs hinweist. Beispielsweise wird als erste Fahrgeschwindigkeitsschwelle eine Fahrgeschwindigkeit von mindestens 40 km/h, mindestens 50 km/h, mindestens 60 km/h, mindestens 80 km/h, mindestens 90 km/h oder mindestens 100 km/h gewählt.

Als weiteres oder alternatives Kriterium kann geprüft werden, ob die Fahrgeschwindigkeit die zweite Fahrgeschwindigkeitsschwelle über die bestimmte Zeitdauer hinweg überschreitet. Die zweite Fahrgeschwindigkeitsschwelle wird dabei kleiner gewählt als die erste Fahrgeschwindigkeitsschwelle. Beispielsweise beträgt sie mindestens 15 km/h, mindestens 20 km/h, mindestens 25 km/h, mindestens 30 km/h, mindestens 35 km/h oder mindestens 40 km/h. Die bestimmte Zeitdauer kann beispielsweise der bereits erwähnten Mindestzeitdauer entsprechen. Beispielsweise beträgt sie mindestens 30 Sekunden, mindestens 40 Sekunden, mindestens 50 Sekunden oder mindestens 60 Sekunden. Weiterhin kann es vorgesehen sein, in die Normalbetriebsart zu wechseln beziehungsweise den Zähler zurückzusetzen, wenn das Rückwärtsfahrprogramm ausgewählt oder der Rückwärtsfahrgang eingelegt ist. Dies ist insbesondere der Fall, wenn gleichzeitig die weitere Fahrgeschwindigkeitsschwelle durch die Fahrgeschwindigkeit überschritten wird, also tatsächlich eine Rückwärtsfahrt des Kraftfahrzeugs vorgenommen wird. Vorteilhafterweise müssen also beide Bedingungen erfüllt sein. Die weitere Fahrgeschwindigkeitsschwelle beträgt beispielsweise mindestens 1 km/h, mindestens 2 km/h, mindestens 3 km/h, mindestens 4 km/h oder mindestens 5 km/h.

Schließlich kann als weiteres Kriterium herangezogen werden, ob der Anfahrkennwert die Anfahrkennwertaustrittsschwelle überschreitet. Die Anfahrkennwertaustrittsschwelle kann grundsätzlich beliebig gewählt sein. Beispielsweise wird sie analog zu dem Anfahrwert beziehungsweise der Anfahrkennwertschwelle ermittelt, also aus der maximalen Fahrpedalstellung und/oder dem maximalen Fahrgeschwindigkeitsgradient während der Fahrgeschwindigkeitserhöhung, insbesondere während der unmittelbar vorhergehenden Fahrgeschwindigkeitserhöhung beziehungsweise den letzten unmittelbar vorhergehenden Fahrgeschwindigkeitserhöhungen.

Beispielsweise wird die Anfahrkennwertaustrittsschwelle aus der maximalen Fahrpedalstellung während der Fahrgeschwindigkeitserhöhung beziehungsweise dem Mittelwert der maximalen Fahrpedalstellungen während der Fahrgeschwindigkeitserhöhungen sowie dem maximalen Fahrgeschwindigkeitsgradient beziehungsweise dem Mittelwert der maximalen Fahrgeschwindigkeitsgradienten der Fahrgeschwindigkeitserhöhungen ermittelt. Beispielsweise wird die erste maximale Fahrpedalstellung beziehungsweise ihr Mittelwert mit einem ersten Faktor und der maximale Fahrgeschwindigkeitsgradient beziehungsweise sein Mittelwert mit einem zweiten Faktor multipliziert und die Ergebnisse der beiden Multiplikationen addiert. Als erster Faktor kann beispielsweise 1,16 herangezogen werden, als zweiter Faktor 1,0.

Es soll explizit darauf hingewiesen werden, dass es zum Wechsel in die Normalbetriebsart und/oder zum Zurücksetzen des Zählers ausreichend sein kann, wenn eine einzige der vorstehend genannten Bedingungen erfüllt ist. Bevorzugt müssen jedoch mehrere der Bedingungen oder alle Bedingungen erfüllt sein.

Eine bevorzugte Weiterbildung der Erfindung sieht vor, dass die Untergrundneigungsschwelle und/oder die Fahrpedalstellungsschwelle in Abhängigkeit von einer Fahrzeugmasse ermittelt werden. Die Fahrzeugmasse kann entweder gemessen oder geschätzt werden, wobei letzteres vorzugsweise mittels eines Fahrzeugmassenmodells erfolgt. Üblicherweise werden die Untergrundneigungsschwelle und die Fahrpedalstellungsschwelle umso kleiner gewählt, je größer die Fahrzeugmasse ist. Das bedeutet, dass bei einer ersten Fahrzeugmasse die Untergrundneigungsschwelle jeweils einen ersten Wert aufweisen, während bei einer größeren zweiten Fahrzeugmasse die Untergrundneigungsschwelle und/oder die Fahrpedalstellungsschwelle jeweils einen kleineren zweiten Wert annehmen. Auf diese Art und Weise wird stets ein zuverlässiges Betreiben, insbesondere Anfahren des Kraftfahrzeugs ermöglicht. Beispielsweise wird aus der Alternativbetriebsart in die Normalbetriebsart umgeschaltet, sobald festgestellt wird, dass die Fahrzeugmasse zu groß ist, um bei der momentan vorliegenden Untergrundneigung und/oder der momentan vorliegenden Fahrpedalstellung ein zuverlässiges und komfortables Anfahren des Fahrzeugs zu ermöglichen.

Schließlich kann in einer weiteren Ausgestaltung der Erfindung vorgesehen sein, dass als Getriebe ein automatisiertes Getriebe oder ein Automatikgetriebe verwendet wird. Unter dem automatisierten Getriebe ist beispielsweise ein Stufenautomat oder ein Mehrfachkupplungsgetriebe, insbesondere ein Doppelkupplungsgetriebe, zu verstehen. Das Automatikgetriebe ist beispielsweise ein Mehrfachkupplungsgetriebe, insbesondere ein Doppelkupplungsgetriebe oder ein Wandler-Getriebe beziehungsweise ein Wandler-Automatikgetriebe, welches als Anfahrelement beziehungsweise Anfahrkupplung eine hydraulische Kupplung oder einen Drehmomentwandler, insbesondere einen Trilok-Wandler, aufweist.

Der Hauptunterschied zwischen dem automatisierten Getriebe und dem Automatikgetriebe liegt darin, dass bei ersterem der momentan eingelegte Fahrgang beziehungsweise der an dem Getriebe eingestellte Fahrgang vor und/oder während einem Stillstand des Kraftfahrzeugs ausgelegt oder alternativ das Anfahrelement beziehungsweise die Anfahrkupplung geöffnet werden muss. Im Falle des Automatikgetriebes kann der Fahrgang auch während des Stillstands des Kraftfahrzeugs beibehalten werden, also an dem Getriebe eingestellt bleiben. Dabei kann jedoch eine eventuell vorgesehene Wandlerüberbrückung geöffnet werden, um eine nahezu vollständige Entkopplung zwischen der Antriebseinrichtung und der wenigstens einen angetriebenen Achse mittels des Wandlers zu erzielen.

Die Erfindung betrifft weiterhin eine Getriebeeinrichtung für ein Kraftfahrzeug, insbesondere zur Durchführung des vorstehend erläuterten Verfahrens, wobei die Getriebeeinrichtung dazu ausgebildet ist, einen Fahrgang aus einer Fahrgangmenge auszuwählen und an einem Getriebe einzustellen und bei Überschreiten einer Drehzahlobergrenze einen Fahrgang mit einer größeren Übersetzung aus der Fahrgangmenge auszuwählen und an dem Getriebe einzustellen. Weiterhin ist vorgesehen, dass in einer Normalbetriebsart die Fahrgangmenge einer Normalbetriebsfahrgangmenge, die eine Vielzahl von unterschiedlichen Fahrgängen umfasst, und die Drehzahlobergrenze einer Normalbetriebsdrehzahlobergrenze entspricht, und in einer Alternativbetriebsart die Fahrgangmenge einer Alternativbetriebsfahrgangmenge, die eine geringere Anzahl an unterschiedlichen Fahrgängen aufweist als die Normalbetriebsfahrgangmenge, und die Drehzahlobergrenze einer von der Normalbetriebsdrehzahlobergrenze verschiedenen Alternativdrehzahlobergrenze Normalbetriebsdrehzahluntergrenze verschiedenen entspricht. Dabei ist vorgesehen, dass ein kleinster Fahrgang der Alternativbetriebsfahrgangmenge größer ist als ein kleinster Fahrgang der Normalbetriebsfahrgangmenge, und dass die Alternativbetriebsdrehzahlobergrenze höher ist als die Normalbetriebsdrehzahlobergrenze.

Auf die Vorteile einer derartigen Vorgehensweise beziehungsweise einer derartigen Ausgestaltung der Getriebeeinrichtung wurde bereits hingewiesen. Sowohl die Getriebeeinrichtung als auch das Verfahren können gemäß den vorstehenden Ausführungen weitergebildet sein, sodass insoweit auf diese verwiesen wird.

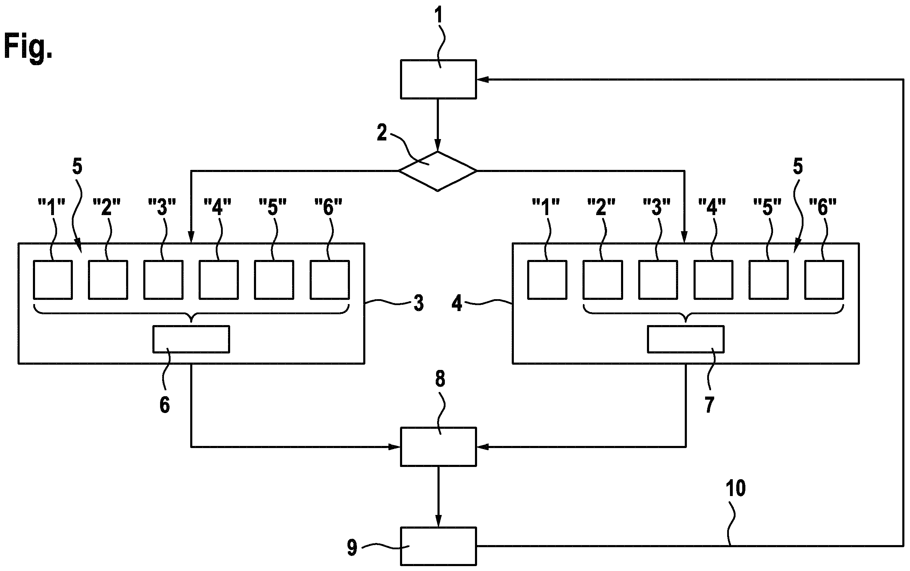

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Ablaufdiagramm eines Verfahrens zum Betreiben einer Getriebeeinrichtung für ein Kraftfahrzeug.

Die Figur zeigt ein Ablaufdiagramm, anhand welchem ein Verfahren zum Betreiben einer Getriebeeinrichtung beschrieben wird. Die Getriebeeinrichtung ist beispielsweise einem Kraftfahrzeug zugeordnet und bildet insoweit einen Bestandteil von diesem. Das Verfahren beginnt an einem Startpunkt 1. Ausgehend von diesem wird im Rahmen einer Verzweigung 2 darauf geprüft, ob eine momentane Betriebsart der Getriebeeinrichtung eine Normalbetriebsart oder eine Alternativbetriebsart ist. In ersterem Fall wird in Richtung einer Operation 3, in letzterem Fall in Richtung einer Operation 4 verzweigt.

Im Rahmen der Operation 3 ist eine Gesamtfahrgangmenge 5 angedeutet, welche alle Fahrgänge, insbesondere alle Vorwärtsfahrgänge, des Getriebes enthält. In dem hier dargestellten Ausführungsbeispiel sind sechs Vorwärtsfahrgänge vorgesehen, welche mit "1", "2", "3", "4", "5" sowie "6" bezeichnet sind, wobei eine dem jeweiligen Fahrgang zugeordnete Übersetzung in dieser Reihenfolge zunimmt. Grundsätzlich kann die Anzahl der Fahrgänge, insbesondere der Vorwärtsfahrgänge jedoch beliebig gewählt sein. Aus den in der Gesamtfahrgangmenge 5 vorliegenden Fahrgängen wird nun im Rahmen der Operation 3 eine Normalbetriebsfahrgangmenge 6 ausgewählt. Üblicherweise entspricht die Normalbetriebsfahrgangmenge 6 der Gesamtfahrgangmenge 5, enthält also ebenso alle Fahrgänge beziehungsweise alle Vorwärtsfahrgänge. Dies ist durch die alle Fahrgänge umfassende Klammer angedeutet.

Im Rahmen der Operation 4 wird für die Alternativbetriebsart eine Alternativbetriebsfahrgangmenge 7 zusammengestellt. Auch hier ist wiederum die Gesamtfahrgangmenge 5 angedeutet. Es wird deutlich, dass die Alternativbetriebsfahrgangmenge 7 nicht alle Gänge der Gesamtfahrgangmenge 5 umfasst. Insbesondere ist der kleinste Fahrgang der Alternativbetriebsfahrgangmenge 7 größer als ein kleinster Fahrgang der der Normalbetriebsfahrgangmenge 6. In dem hier dargestellten Beispiel enthält die Alternativbetriebsfahrgangmenge 7 alle Fahrgänge der Gesamtfahrgangmenge 5 mit Ausnahme des kleinsten Fahrgangs "1". Wird die Operation 3 durchgeführt, so entspricht nachfolgend eine Fahrgangmenge der Normalbetriebsfahrgangmenge 6; wird dagegen die Operation 4 durchgeführt, so entspricht die Fahrgangmenge der Alternativfahrgangmenge 7.

Im Rahmen einer Operation 8 wird nun aus der Fahrgangmenge, also entweder der Normalbetriebsfahrgangmenge 6 oder der Alternativbetriebsfahrgangmenge 7, ein Fahrgang ausgewählt und an dem Getriebe eingestellt. Dies kann beispielsweise vorgesehen sein, wenn eine Drehzahl, insbesondere eine Drehzahl einer Eingangswelle des Getriebes und/oder eine Drehzahl einer Antriebseinrichtung des Kraftfahrzeugs und/oder eine Abtriebsdrehzahl, also zum Beispiel die Drehzahl einer Getriebeausgangswelle des Schaltgetriebes, eine Drehzahlobergrenze überschreitet. In diesem Fall wird ein größerer Fahrgang beziehungsweise ein Fahrgang mit einer größeren Übersetzung als der momentan eingelegte beziehungsweise an dem Getriebe eingestellte Fahrgang aus der Fahrgangmenge ausgewählt und an dem Getriebe eingestellt.

Im Falle des Unterschreitens einer Drehzahluntergrenze durch die Drehzahl kann analog vorgegangen werden, wobei hier jedoch ein kleinerer Fahrgang beziehungsweise ein Fahrgang mit einer kleineren Übersetzung aus der Fahrgangmenge ausgewählt wird. Auf die Operation 8 folgt ein Endpunkt 9, an welchem das Verfahren beendet werden kann. Alternativ kann entlang des Pfeils 10 erneut zu dem Startpunkt 1 gesprungen werden.

Mithilfe des hier vorgestellten Verfahrens kann die Anzahl an Schaltvorgängen reduziert werden, insbesondere bei einer Langsamfahrt des Kraftfahrzeugs beziehungsweise bei Stop and Go-Verkehr, also einer Stausituation. Somit wird der Fahrkomfort des Kraftfahrzeugs deutlich verbessert.

## Patentansprüche

1. Verfahren zum Betreiben einer Getriebeeinrichtung für ein Kraftfahrzeug, wobei ein Fahrgang aus einer Fahrgangmenge (6,7) ausgewählt und an einem Getriebe eingestellt wird und bei Überschreiten einer Drehzahlobergrenze ein Fahrgang mit einer größeren Übersetzung aus der Fahrgangmenge (6,7) ausgewählt und an dem Getriebe eingestellt wird, wobei in einer Normalbetriebsart die Fahrgangmenge (6,7) einer Normalbetriebsfahrgangmenge (6), die eine Vielzahl von unterschiedlichen Fahrgängen umfasst, und die Drehzahlobergrenze einer Normalbetriebsdrehzahlobergrenze entspricht, und in einer Alternativbetriebsart die Fahrgangmenge (6,7) einer Alternativbetriebsfahrgangmenge (7), die eine geringere Anzahl an unterschiedlichen Fahrgängen aufweist als die Normalbetriebsfahrgangmenge, und die Drehzahlobergrenze einer von der Normalbetriebsdrehzahlobergrenze verschiedenen Alternativbetriebsdrehzahlobergrenze entspricht, **dadurch gekennzeichnet, dass** ein kleinster Fahrgang der Alternativbetriebsfahrgangmenge (7) größer ist als ein kleinster Fahrgang der Normalbetriebsfahrgangmenge (6), und dass die Alternativbetriebsdrehzahlobergrenze höher ist als die Normalbetriebsdrehzahlobergrenze.

2. Verfahren nach Anspruch 1, **dadurch gekennzeichnet, dass** der kleinste Fahrgang der Alternativbetriebsfahrgangmenge (6) einem auf den kleinsten Fahrgang folgenden Fahrgang der Normalbetriebsfahrgangmenge (7) entspricht.

3. Verfahren nach einem der vorhergehenden Ansprüche, **dadurch gekennzeichnet, dass** der kleinste Fahrgang der Alternativbetriebsfahrgangmenge (7) als Anfahrgang ausgelegt ist.

4. Verfahren nach einem der vorhergehenden Ansprüche, **dadurch gekennzeichnet, dass** in die Alternativbetriebsart umgeschaltet wird, wenn eine oder mehrere der folgenden Bedingungen zutreffen:
- An der Getriebeeinrichtung ist ein bestimmtes Fahrprogramm oder ein bestimmter Fahrmodus eingestellt, und/oder
- eine Fahrgeschwindigkeit ist kleiner oder gleich einer Fahrgeschwindigkeitsschwelle, und/oder
- eine Untergrundneigung ist kleiner oder gleich einer Untergrundneigungsschwelle, und/oder
- eine Absolutbeschleunigung ist kleiner oder gleich einer Beschleunigungsschwelle, und/oder
- ein Lenkwinkel ist kleiner oder gleich einer Lenkwinkelschwelle, und/oder
- eine Fahrgangwechselhäufigkeit innerhalb der Fahrgangmenge und/oder einer Untermenge der Fahrgangmenge übersteigt eine Fahrgangwechselhäufigkeitsschwelle, und/oder
- eine Temperatur liegt innerhalb eines Temperaturbereichs, und/oder
- ein Integralwert der Fahrgeschwindigkeit liegt innerhalb eines Fahrgeschwindigkeitsbereichs, und/oder
- eine Fahrpedalstellung ist kleiner oder gleich einer Fahrpedalstellungsschwelle, und/oder
- ein zeitlicher Gradient der Fahrpedalstellung ist kleiner oder gleich einer Fahrpedalstellungsgradientenschwelle, und/oder
- ein Anhängerbetrieb liegt nicht vor, und/oder
- eine Fahrzeugmasse liegt innerhalb eines bestimmten Fahrzeugmassenbereichs.

5. Verfahren nach Anspruch 4, **dadurch gekennzeichnet, dass** in die Normalbetriebsart umgeschaltet wird, wenn einer oder mehreren der folgenden Bedingungen zutreffen:
- An der Getriebeeinrichtung ist ein von dem bestimmten Fahrprogramm verschiedenes Fahrprogramm und/oder ein von dem bestimmten Fahrmodus verschiedener Fahrmodus eingestellt, und/oder
- die Fahrgeschwindigkeit ist größer als die Fahrgeschwindigkeitsschwelle, und/oder
- die Untergrundneigung ist größer als die Untergrundneigungsschwelle, und/oder
- die Absolutbeschleunigung ist größer als die Beschleunigungsschwelle, und/oder
- der Lenkwinkel ist größer als die Lenkwinkelschwelle, und/oder
- die Fahrgangwechselhäufigkeit innerhalb der Fahrgangmenge und/oder der Untermenge der Fahrgangmenge ist kleiner oder gleich der Fahrgangwechselhäufigkeitsschwelle, und/oder
- die Temperatur liegt außerhalb des Temperaturbereichs, und/oder
- der Integralwert der Fahrgeschwindigkeit liegt außerhalb des Fahrgeschwindigkeitsbereichs, und/oder
- die Fahrpedalstellung ist größer als die Fahrpedalstellungsschwelle, und/oder
- der zeitliche Gradient der Fahrpedalstellung ist größer als die Fahrpedalstellungsgradientenschwelle, und/oder
- der Anhängerbetrieb liegt vor, und/oder
- die Fahrzeugmasse liegt außerhalb des bestimmten Fahrzeugmassenbereichs.

6. Verfahren nach Anspruch 4 oder 5, **dadurch gekennzeichnet, dass** die Untergrundneigungsschwelle und/oder die Fahrpedalstellungsschwelle in Abhängigkeit von der Fahrzeugmasse ermittelt werden.

7. Verfahren nach einem der vorhergehenden Ansprüche, **dadurch gekennzeichnet, dass** als Getriebe ein automatisiertes Getriebe oder ein Automatikgetriebe verwendet wird.

8. Getriebeeinrichtung für ein Kraftfahrzeug zur Durchführung des Verfahrens nach einem der vorhergehenden Ansprüche, wobei die Getriebeeinrichtung dazu ausgebildet ist, einen Fahrgang aus einer Fahrgangmenge (6,7) auszuwählen und an einem Getriebe einzustellen und bei Überschreiten einer Drehzahlobergrenze einen Fahrgang mit einer größeren Übersetzung aus der Fahrgangmenge (6,7) auszuwählen und an dem Getriebe einzustellen, wobei in einer Normalbetriebsart die Fahrgangmenge (6,7) einer Normalbetriebsfahrgangmenge (6), die eine Vielzahl von unterschiedlichen Fahrgängen umfasst, und die Drehzahlobergrenze einer Normalbetriebsdrehzahlobergrenze entspricht, und in einer Alternativbetriebsart die Fahrgangmenge (6,7) einer Alternativbetriebsfahrgangmenge (7), die eine geringere Anzahl an unterschiedlichen Fahrgängen aufweist als die Normalbetriebsfahrgangmenge (6), und die Drehzahlobergrenze einer von der Normalbetriebsdrehzahlobergrenze verschiedenen Alternativbetriebsdrehzahlobergrenze entspricht, **dadurch gekennzeichnet, dass** ein kleinster Fahrgang der Alternativbetriebsfahrgangmenge (7) größer ist als ein kleinster Fahrgang der Normalbetriebsfahrgangmenge (6), und dass die Alternativbetriebsdrehzahlobergrenze höher ist als die Normalbetriebsdrehzahlobergrenze.

## Claims

1. Method for operating a transmission device for a motor vehicle, wherein a driving gear is selected from a set of driving gears (6,7) and set on a transmission and, on exceeding an upper speed limit, a gear with a larger gear ratio is selected from the set of driving gears (6,7) and set on the transmission, wherein in a normal operating mode, the set of driving gears (6,7) corresponds to a normal operation set of driving gears (6), which comprises a plurality of different driving gears, and the upper speed limit corresponds to a normal operation upper speed limit, and in an alternative operating mode, the set of driving gears (6,7) corresponds to and alternative operation set of driving gears (7), which has a smaller number of different driving gears than the normal operation set of driving gears, and the upper speed limit corresponds to an alternative operation upper speed limit that is different from the normal operation upper speed limit, **characterised in that** a smallest driving gear of the alternative operation set of driving gears (7) is larger than the smallest driving gear of the normal operation set of driving gears (6), and that the alternative operation upper speed limit is higher than the normal operation upper speed limit.

2. Method according to claim 1, **characterised in that** the smallest driving gear of the alternative operation set of driving gears (6) corresponds to a driving gear of the normal operation set of driving gears (7) following the smallest driving gear.

3. Method according to one of the preceding claims, **characterised in that** the smallest driving gear of the alternative operation set of driving gears (7) is designed as a starting gear.

4. Method according to one of the preceding claims, **characterised in that** a change is made into the alternative operating mode, if one or more of the following conditions is met:
- a specific driving program or a specific driving mode is set on the transmission device, and/or
- a driving speed is less than or equal to a driving speed threshold, and/or
- a ground slope is less than or equal to a ground slope threshold, and/or
- an absolute acceleration is less than or equal to an acceleration threshold, and/or
- a steering angle is less than or equal to a steering angle threshold, and/or
- a driving gear change frequency within the set of driving gears and/or a subset of the set of driving gears exceeds a driving gear change frequency threshold, and/or
- a temperature is within a temperature range, and/or
- an integral value of the driving speed is within a driving speed range, and/or
- an accelerator pedal position is less than or equal to an accelerator pedal position threshold, and/or
- a gradient over time of the accelerator pedal position is less than or equal to an accelerator pedal position gradient threshold, and/or
- there is no trailer operation, and/or
- a vehicle mass is within a specified vehicle mass range.

5. Method according to claim 4, **characterised in that** a change is made into the normal operating mode, if one or more of the following conditions is met:
- a driving program different from a specified driving program is set on the transmission device and/or a driving mode different from the specified driving mode is set, and/or
- the driving speed is greater than the driving speed threshold, and/or
- the ground slope is greater than the ground slope threshold, and/or
- the absolute acceleration is greater than the acceleration threshold, and/or
- the steering angle is greater than the steering angle threshold, and/or
- the driving gear change frequency within the set of driving gears and/or a subset of the set of driving gears is less than or equal to the driving gear change frequency threshold, and/or
- the temperature is outside the temperature range, and/or
- the integral value of the driving speed is outside a driving speed range, and/or
- the accelerator pedal position is greater than or equal to the accelerator pedal position threshold, and/or
- the gradient over time of the accelerator pedal position is greater than or equal to an accelerator pedal position gradient threshold, and/or
- the trailer is present, and/or
- the vehicle mass is outside a specified vehicle mass range.

6. Method according to claim 4 or 5, **characterised in that** the ground slope threshold and/or the acceleration pedal position threshold is determined depending on the vehicle mass.

7. Method according to one of the preceding claims, **characterised in that** an automated transmission or an automatic transmission is used as transmission.

8. Transmission device for a motor vehicle according to one of the preceding claims, wherein the transmission device is designed such that a driving gear is selected from a set of driving gears (6,7) and set on a transmission and, on exceeding an upper speed limit, a gear with a larger gear ratio is selected from the set of driving gears (6,7) and set on the transmission, wherein in a normal operating mode, the set of driving gears (6,7) corresponds to a normal operation set of driving gears (6), which comprises a plurality of different driving gears, and the upper speed limit corresponds to a normal operation upper speed limit, and in an alternative operating mode, the set of driving gears (6,7) corresponds to and alternative operation set of driving gears (7), which has a smaller number of different driving gears than the normal operation set of driving gears (6), and the upper speed limit corresponds to an alternative operation upper speed limit that is different from the normal operation upper speed limit, **characterised in that** a smallest driving gear of the alternative operation set of driving gears (7) is larger than the smallest driving gear of the normal operation set of driving gears (6), and that the alternative operation upper speed limit is higher than the normal operation upper speed limit.

## Revendications

1. Procédé de fonctionnement d'une boîte de vitesses pour un véhicule automobile, dans lequel un rapport d'une quantité de rapports (6, 7) est sélectionné et est réglé au niveau d'une boîte de vitesses et en cas de dépassement d'une limite supérieure de vitesse de rotation un rapport avec une transmission supérieure d'une quantité de rapports (6, 7) est sélectionné et est réglé au niveau de la boîte de transmission, dans lequel dans un mode de fonctionnement normal la quantité de rapports (6, 7) correspond à une quantité de rapports de fonctionnement normal (6) qui comporte une pluralité de différents rapports, et la limite supérieure de vitesse de rotation correspond à une limite supérieure de vitesse de rotation de fonctionnement normal, et dans un mode de fonctionnement alternatif la quantité de rapports (6, 7) correspond à une quantité de rapports de fonctionnement alternatif (7) qui présente un nombre plus faible de rapports différents que la quantité de rapports de fonctionnement normal, et la limite supérieure de vitesse de rotation correspond à une limite supérieure de vitesse de rotation de fonctionnement alternatif différente de la limite supérieure de vitesse de rotation de fonctionnement normal, **caractérisé en ce que** le plus petit rapport de la quantité de rapports de fonctionnement alternatif (7) est supérieur au plus petit rapport de la quantité de rapports de fonctionnement normal (6), et que la limite supérieure de vitesse de rotation de fonctionnement alternatif est supérieure à la limite supérieure de vitesse de rotation de fonctionnement normal.

2. Procédé selon la revendication 1, **caractérisé en ce que** le plus petit rapport de la quantité de rapports de fonctionnement alternatif (6) correspond à un rapport suivant le plus petit rapport de la quantité de rapports de fonctionnement normal (7).

3. Procédé selon l'une des revendications précédentes, **caractérisé en ce que** le plus petit rapport de la quantité de rapports de fonctionnement alternatif (7) est conçu comme rapport de démarrage.

4. Procédé selon l'une des revendications précédentes, **caractérisé en ce qu'**il est passé dans le mode de fonctionnement alternatif lorsqu'une ou plusieurs des conditions suivantes s'appliquent:
- un programme de conduite déterminé ou un mode de conduite déterminé est réglé au niveau de la boîte de vitesses, et/ou
- une vitesse de conduite est inférieure ou égale à un seuil de vitesse de conduite, et/ou
- une inclinaison du sol est inférieure ou égale à un seuil d'inclinaison du sol, et/ou
- une accélération absolue est inférieure ou égale à un seuil d'accélération, et/ou
- un angle de braquage est inférieur ou égal à un seuil d'angle de braquage, et/ou
- une fréquence de changement de rapport dans la quantité de rapports et/ou une quantité inférieure de la quantité de rapports dépasse un seuil de fréquence de changement de rapport, et/ou
- une température se trouve dans une plage de température, et/ou
- une valeur intégrale de la vitesse de conduite se trouve dans une plage de vitesse de conduite, et/ou
- une position de pédale d'accélération est inférieure ou égale à un seuil de position de pédale d'accélération, et/ou
- un gradient temporel de la position de pédale d'accélération est inférieur ou égal à un seuil de gradient de position de pédale d'accélération, et/ou
- un remorquage ne se présente pas, et/ou
- une masse de véhicule se trouve dans une plage de masse de véhicule déterminée.

5. Procédé selon la revendication 4, **caractérisé en ce qu'**il est commuté dans le mode de fonctionnement normal lorsqu'une ou plusieurs des conditions suivantes s'appliquent:
- un programme de conduite différent du programme de conduite déterminé et/ou un mode de conduite différent du mode de conduite déterminé est réglé au niveau de la boîte de vitesses, et/ou
- la vitesse de conduite est supérieure au seuil de vitesse de conduite, et/ou
- l'inclinaison du sol est supérieure au seuil d'inclinaison du sol, et/ou
- l'accélération absolue est supérieure au seuil d'accélération, et/ou
- l'angle de braquage est supérieur au seuil d'angle de braquage, et/ou
- la fréquence de changement de rapport dans la quantité de rapports et/ou la quantité inférieure de la quantité de rapports est inférieure ou égale au seuil de fréquence de changement de rapport, et/ou
- la température se trouve en dehors de la plage de température, et/ou
- la valeur intégrale de la vitesse de conduite se trouve en dehors de la plage de vitesse de conduite, et/ou
- la position de pédale d'accélération est supérieure au seuil de position de pédale d'accélération, et/ou
- le gradient temporel de la position de pédale d'accélération est supérieur au seuil de gradient de position de pédale d'accélération, et/ou
- le remorquage ne se présente pas, et/ou
- la masse de véhicule se trouve en dehors de la plage de masse de véhicule déterminée.

6. Procédé selon la revendication 4 ou 5, **caractérisé en ce que** le seuil d'inclinaison du sol et/ou le seuil de position de pédale d'accélération est déterminé en fonction de la masse de véhicule.

7. Procédé selon l'une des revendications précédentes, **caractérisé en ce qu'**une boîte de vitesses automatisée ou une boîte de vitesses automatique est utilisée comme boîte de vitesses.

8. Boîte de vitesses pour un véhicule automobile pour la réalisation du procédé selon l'une des revendications précédentes, dans lequel la boîte de vitesses est réalisée afin de sélectionner un rapport d'une quantité de rapports (6, 7) et de le régler au niveau d'une boîte de vitesses et en cas de dépassement d'une limite supérieure de vitesse de rotation de sélectionner un rapport avec une transmission supérieure de la quantité de rapports (6, 7) et de le régler au niveau de la boîte de vitesses, dans lequel dans un mode de fonctionnement normal la quantité de rapports (6, 7) correspond à une quantité de rapports de fonctionnement normal (6) qui comporte une pluralité de rapports différents, et la limite supérieure de vitesse de rotation correspond à une limite supérieure de vitesse de rotation de fonctionnement normal, et dans un mode de fonctionnement alternatif la quantité de rapports (6, 7) correspond à une quantité de rapports de fonctionnement alternatif (7) qui présente un nombre plus faible de rapports différents que la quantité de rapports de fonctionnement normal (6), et la limite supérieure de vitesse de rotation correspond à une limite supérieure de vitesse de rotation de fonctionnement alternatif différente de la limite supérieure de vitesse de rotation de fonctionnement normal, **caractérisé en ce que** le plus petit rapport de la quantité de rapports de fonctionnement alternatif (7) est supérieur au plus petit rapport de la quantité de rapports de fonctionnement normal (6), et que la limite supérieure de vitesse de rotation de fonctionnement alternatif est supérieure à la limite supérieure de vitesse de rotation de fonctionnement normal.
